# EUROPÄISCHE PATENTSCHRIFT

(11) **EP 2 617 545 B1**
(45) Veröffentlichungstag und Bekanntmachung des Hinweises auf die Patenterteilung: **25.06.2014**
(21) Anmeldenummer: 12151929.2
(22) Anmeldetag: 20.01.2012
(51) Int. Cl.: B29B 7/00, B29B 7/48, B29B 9/06

(54) **Verfahren zur Herstellung von Farbmittel-Kunststoff-Konzentraten**
Method for manufacturing dye-plastic concentrates
Procédé de fabrication de concentrés de colorant-matière synthétique

(43) Veröffentlichungstag der Anmeldung: 24.07.2013
(73) Patentinhaber: Coperion GmbH, 70469 Stuttgart (DE)
(72) Erfinder: Feuerlein, Ute, 70567 Stuttgart (DE); Weinmann, Matthias, 71067 Sindelfingen (DE)
(74) Vertreter: Rau, Schneck & Hübner Patentanwälte Rechtsanwälte PartGmbB

(56) Entgegenhaltungen:
- WO-A1-97/11830
- WO-A2-2007/033328
- US-A- 5 711 904
- US-A1- 2004 196 734

## Beschreibung

Die Erfindung betrifft ein Verfahren zur Herstellung von Farbmittel-Kunststoff-Konzentraten.

Farbmittel-Kunststoff-Konzentrate dienen zum Einfärben von Kunststofferzeugnissen und werden allgemein üblich als Farb-Masterbatches bezeichnet. Bei Farb-Masterbatches handelt es sich meist um granulatförmige Konzentrate von Farbstoffen und/oder Pigmenten und gegebenenfalls Additiven, die in eine Kunststoff- bzw. Polymermatrix eingebettet sind. Farb-Masterbatches ermöglichen eine staubfreie und rezepturgetreue Zugabe von Farbmitteln und gegebenenfalls Additiven in Kunststoffe bzw. Compounds.

Die Herstellung bzw. die Aufbereitung von Farb-Masterbatches ist maschinentechnisch schwierig, da hohe Farbmittelanteile in die Kunststoffmatrix eingearbeitet werden müssen. Dies gilt insbesondere, wenn als Farbmittel Pigmente, beispielsweise in Form von Ruß, verwendet werden, da die Pigmentteilchen aufgrund ihrer geringen Teilchengrößen ausgeprägte Anziehungskräfte aufweisen, die ein homogenes Verteilen der Pigmentteilchen in der Kunststoffmatrix erschweren. Die Herstellung wird weiter erschwert, wenn zusätzlich Additive eingearbeitet werden müssen. Da für die Einarbeitung der Pigmentteilchen in die Kunststoffmatrix hohe Kräfte erforderlich sind, kommt es hierbei zu einer unerwünschten Erwärmung der Kunststoffmatrix. Dies ist nachteilig, da bei einer unzulässigen Erwärmung temperaturempfindliche Komponenten thermisch geschädigt und abgebaut werden, wodurch die Produktqualität der Farb-Masterbatches erheblich beeinträchtigt wird.

Aus der US 5 711 904 A ist eine Aufbereitungsanlage sowie ein zugehöriges Verfahren zur Herstellung von Elastomer-Masterbatches bekannt. In eine Schneckenmaschine werden über eine Materialzuführung Elastomermaterial und Zusatzstoffe, wie beispielsweise Ruß, zugeführt. Das Elastomermaterial und die Zusatzstoffe werden in der Schneckenmaschine miteinander vermischt. Mittels einer Seiten-Schneckenmaschine werden der , Schneckenmaschine weitere Zusatzstoffe zugeführt und in die Mischung eingearbeitet.

Aus der WO 2007/033 328 A2 ist eine Aufbereitungsanlage zur Aufbereitung einer Mischung aus einem Polymermaterial und einem organischen Material bekannt.

Aus der US 2004/0196734 A1 ist ein Verfahren und eine Vorrichtung zum Mischen eines Additivs mit einer Schmelze bekannt. Das Additiv und die Schmelze werden in einem statischen oder dynamischen Mischer gemischt.

Der Erfindung liegt die Aufgabe zugrunde, ein Verfahren zur Herstellung von Farb-Masterbatches bzw. Farbmittel-Kunststoff-Konzentraten zu schaffen, das auf einfache und produktschonende Weise die Einarbeitung hoher Farbmittel- bzw. Pigmentanteile in das Kunststoffmaterial ermöglicht.

Diese Aufgabe wird durch ein Verfahren mit den Merkmalen des Anspruchs 1 gelöst. Bei dem erfindungsgemäßen Verfahren zur Herstellung von Farbmittel-Kunststoff-Konzentraten bzw. Farb-Masterbatches wird zunächst ein erster Teil des Kunststoffmaterials und das einzuarbeitende Farbmittel in die Haupt-Schneckenmaschine zugeführt und in einer Behandlungszone miteinander zu einer Mischung bzw. Farbmittel-Kunststoff-Mischung homogenisiert. Anschließend wird ein zweiter Teil des Kunststoffmaterials stromabwärts der Behandlungszone und nach dem Einmischen des Farbmittels mittels der Seiten-Schneckenmaschine in die Übergabezone zugeführt und in einer der Übergabezone nachgeordneten weiteren Behandlungszone aufgeschmolzen und mit der Mischung zu dem Farbmittel-Kunststoff-Konzentrat homogenisiert. Das Kunststoffmaterial wird vorzugsweise in fester Form zugeführt, insbesondere als Granulat- und/oder Pulver. Durch dieses erfindungsgemäße Verfahren wird die Temperatur der Mischung bzw. des Farbmittel-Kunststoff-Konzentrats im Vergleich zu herkömmlichen Verfahren bei vergleichbarer Mischgüte deutlich gesenkt. Die Temperatur des Farbmittel-Kunststoff-Konzentrats sinkt, da das Aufschmelzen des zweiten Teils des Kunststoffmaterials größtenteils mit der Enthalpie der in der Haupt-Schneckenmaschine befindlichen Mischung erfolgt. Hierdurch können hohe Anteile von Farbmittel bzw. Pigmentteilchen auf einfache und produktschonende Weise in das Kunststoffmaterial bzw. die Kunststoffmatrix eingearbeitet werden. Thermische Schädigungen und ein thermischer Abbau werden vermieden, wodurch die Produktqualität deutlich gesteigert wird. Das Farbmittel weist in dem fertigen Farbmittel-Kunststoff-Konzentrat einen Anteil von mindestens 30 Gew.-%, insbesondere von mindestens 35 Gew.-%, insbesondere von mindestens 40 Gew.-% und insbesondere von mindestens 50 Gew.-% bezogen auf das Farbmittel-Kunststoff-Konzentrat auf.

Der Aufbereitungsanlage ist in der Förderrichtung vorzugsweise ein Anfahrventil, eine Zahnradpumpe, eine Siebeinrichtung und/oder eine Granuliereinrichtung nachgeordnet. Mittels der Siebeinrichtung wird das Farbmittel-Kunststoff-Konzentrat gegebenenfalls weiter homogenisiert und gleichzeitig gefiltert. In der nachfolgenden Granuliereinrichtung wird das als Schmelze vorliegende Farbmittel-Kunststoff-Konzentrat granuliert. Das erzeugte Granulat bzw. Masterbatch-Granulat kann als Halbzeug bei der Herstellung von Kunststofferzeugnissen bzw. Endprodukten eingesetzt werden.

Ein Verfahren nach einem der Ansprüche 2 bis 5 gewährleistet eine hohe Flexibilität bei der Herstellung von Farb-Masterbatches und damit eine hohe Produktqualität. Je nach Kunststoffmaterial und Farbmittel werden der vor der Übergabezone zugeführte erste Anteil und der in der Übergabezone zugeführte zweite Anteil des Kunststoffmaterials flexibel eingestellt.

Ein Verfahren nach Anspruch 6 gewährleistet die Herstellung von Farb-Masterbatches auf Basis unterschiedlichster Polymere.

Ein Verfahren nach Anspruch 7 gewährleistet ein produktschonendes Einmischen des Farbmittels. Vorzugsweise wird das Farbmittel mittels einer Seiten-Schneckenmaschine nach dem Aufschmelzen des ersten Anteils des Kunststoffmaterials in einer ersten Übergabezone zugeführt und in einer anschließenden Behandlungszone mit dem aufgeschmolzenen Kunststoffmaterial vermischt, bevor mittels einer zweiten Seiten-Schneckenmaschine der zweite Anteil des Kunststoffmaterials in einer zweiten Übergabezone zugeführt wird. Der restliche Anteil des Farbmittels kann in der Einzugszone und/oder nach der Behandlungszone zugeführt werden. Vorzugsweise wird das gesamte Farbmittel in der ersten Übergabezone zugeführt.

Ein Verfahren nach Anspruch 8 gewährleistet in besonderem Maße eine einfache und produktschonende Herstellung von Farb-Masterbatches, da Pigmentteilchen aufgrund ihrer geringen Teilchengröße ausgeprägte Anziehungskräfte aufweisen, die zu besonders schwierig zu homogenisierenden Pigmentagglomeraten führen. Die Homogenisierung bzw. Dispergierung von Pigmentagglomeraten ist maschinentechnisch schwierig und erfordert bei herkömmlichen Verfahren eine hohe Energieeinleitung in das Kunststoffmaterial. Die erforderliche Energieeinleitung zur Homogenisierung bzw. Dispergierung der Pigmentagglomerate kann bei dem erfindungsgemäßen Verfahren erheblich reduziert werden. Insbesondere bei der Verwendung von Ruß als Farbmittel weist die Mischung bei der herkömmlichen Herstellung von Farb- bzw. Ruß-Masterbatches eine äußerst hohe Viskosität auf, wodurch eine hohe Scherenergie eingeleitet wird, die wiederum zu einer hohen Temperatur führt. Dementsprechend kann insbesondere bei Ruß-Masterbatches mit dem erfindungsgemäßen Herstellungsverfahren eine deutliche Senkung der Temperatur erzielt werden.

Ein Verfahren nach Anspruch 9 gewährleistet die Herstellung von Farb-Masterbatches mit einem hohen Anteil an Farbmittel. Das Farbmittel wird vorzugsweise mit einem Anteil von 30 Gew.-% bis 60 Gew.-% bezogen auf das Farbmittel-Kunststoff-Konzentrat zugeführt.

Ein Verfahren nach Anspruch 10 gewährleistet eine schonende Herstellung von Farb-Masterbatches mit einem hohen Anteil an Farbmittel bzw. Pigmentteilchen. Das Farbmittel und der zweite Anteil des Kunststoffmaterials können sukzessive in den ersten Anteil des Kunststoffmaterials bzw. die Mischung eingearbeitet werden. Hierdurch wird eine hohe Mischgüte bei einer vergleichsweise niedrigen Temperatur der Mischung bzw. des Farbmittel-Kunststoff-Konzentrats erzielt. Da keine thermische Schädigung bzw. kein thermischer Abbau während der Herstellung stattfindet, weist das hergestellte Farbmittel-Kunststoff-Konzentrat eine hohe Qualität auf.

Ein Verfahren nach Anspruch 11 gewährleistet auf einfache Weise das Zuführen des ersten Anteils des Kunststoffmaterials. Der erste Anteil wird in üblicher Weise über eine Materialzuführung bzw. einen Zuführtrichter zugeführt.

Ein Verfahren nach Anspruch 12 gewährleistet, dass das Farbmittel erst dann zugeführt wird, wenn der erste Anteil des Kunststoffmaterials in der ersten Behandlungszone bereits vollständig aufgeschmolzen wurde. Das Farbmittel kann hierdurch auf einfache Weise in den aufgeschmolzenen ersten Anteil des Kunststoffmaterials eingemischt werden.

Ein Verfahren nach Anspruch 13 gewährleistet auf einfache Weise, dass der zweite Anteil des Kunststoffmaterials erst dann zugeführt wird, wenn der erste Anteil des Kunststoffmaterials und das Farbmittel bereits ausreichend in der zweiten Behandlungszone homogenisiert bzw. dispergiert wurden.

Ein Verfahren nach Anspruch 14 ermöglicht auf einfache und produktschonende Weise das zusätzliche Einmischen von mindestens einem Additiv in das Farbmittel-Kunststoff-Konzentrat. Durch Additive können dem Farbmittel-Kunststoff Konzentrat bestimmte funktionelle Eigenschaften verliehen werden, wie beispielsweise eine UV-Stabilisierung, Flammschutz-, Antistatik-, Antislip- oder Antiblock-Eigenschaften. Derartige Masterbatches werden auch als Kombinations-Masterbatches bezeichnet, da diese sowohl Farbmittel als auch Additive enthalten. Vorzugsweise wird das mindestens eine Additiv zusammen mit dem ersten Anteil des Kunststoffmaterials in der Einzugszone zugeführt. Alternativ oder zusätzlich kann das mindestens eine Additiv bzw. können weitere Additive mittels der ersten Seiten-Schneckenmaschine und/oder mittels der zweiten Seiten-Schneckenmaschine in mindestens eine der Übergabezonen zugeführt werden.

Ein Verfahren nach Anspruch 15 gewährleistet eine hohe Mischgüte. Vorzugsweise ist auch die Seiten-Schneckenmaschine bzw. sind auch die Seiten-Schneckenmaschinen als gleichsinnig drehende und dichtkämmende Doppelschneckenmaschinen ausgebildet.

Weitere Merkmale, Vorteile und Einzelheiten der Erfindung ergeben sich aus der nachfolgenden Beschreibung eines Ausführungsbeispiels. Es zeigen:
- Fig. 1: eine teilweise geschnitten dargestellte Aufbereitungsanlage zur Herstellung von Farbmittel-Kunststoff-Konzentraten,
- Fig. 2: eine teilweise geschnittene Draufsicht auf die Aufbereitungsanlage in Figur 1, und
- Fig. 3: einen Querschnitt durch die Aufbereitungsanlage entlang der Schnittlinie III-III in Figur 1.

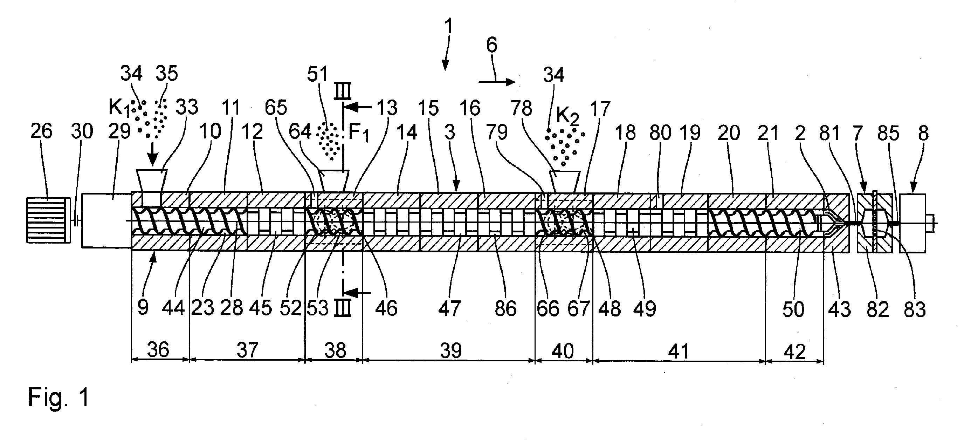

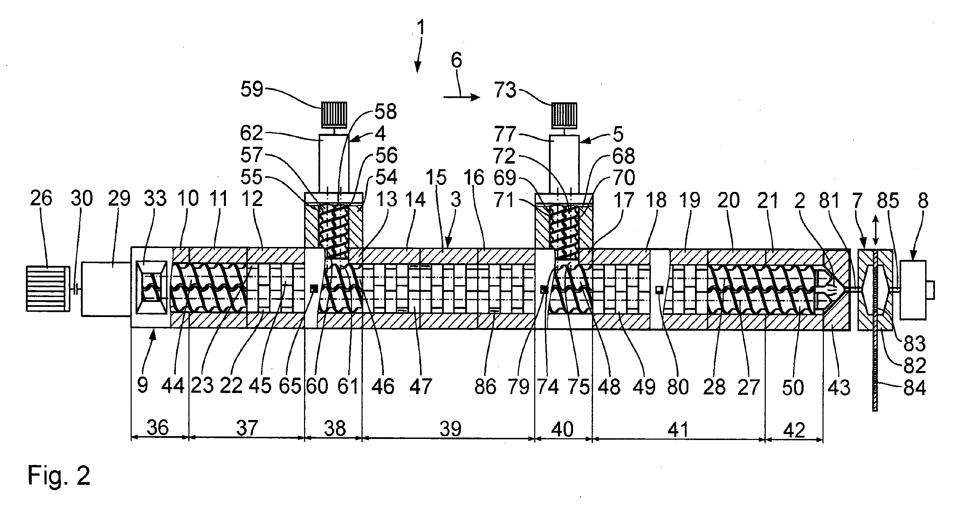

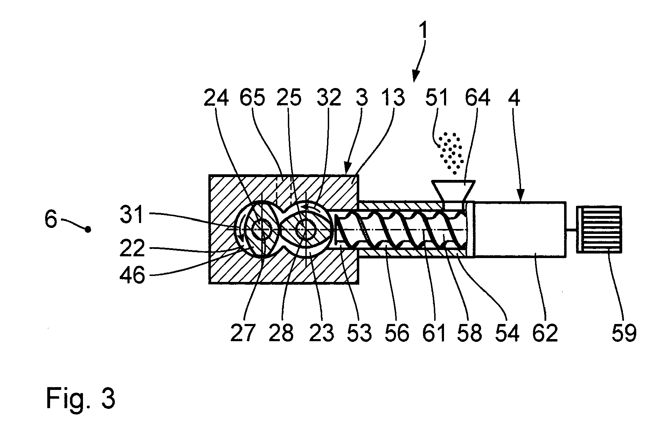

Eine in den Figuren 1 bis 3 dargestellte Aufbereitungsanlage 1 dient zur Herstellung von als Farb-Masterbatches bezeichneten Farbmittel-Kunststoff-Konzentraten 2. Die Aufbereitungsanlage 1 weist eine Haupt-Schneckenmaschine 3 auf, in die in einer Förderrichtung 6 nacheinander zwei Seiten-Schneckenmaschinen 4, 5 münden. Der Haupt-Schneckenmaschine 3 sind in der Förderrichtung 6 eine Siebeinrichtung 7 und eine Granuliereinrichtung 8 nachgeordnet. Die Haupt-Schneckenmaschine 3 und die Seiten-Schneckenmaschinen 4, 5 sind als gleichsinnig drehende und dichtkämmende Doppelschneckenmaschinen ausgebildet.

Die Haupt-Schneckenmaschine 3 weist ein Gehäuse 9 aus mehreren nacheinander angeordneten und als Gehäuseschüssen bezeichneten Gehäuseabschnitten 10 bis 21 auf. Die Gehäuseabschnitte 10 bis 21 sind miteinander verbunden und bilden das Gehäuse 9.

Im Gehäuse 9 sind zwei zueinander parallele und einander durchdringende Gehäusebohrungen 22, 23 ausgebildet, die im Querschnitt die Form einer liegenden Acht haben. In den Gehäusebohrungen 22, 23 sind konzentrisch zwei Wellen 24, 25 angeordnet, die von einem Antriebsmotor 26 um zugehörige Drehachsen 27, 28 drehantreibbar sind. Zwischen den Wellen 24, 25 und dem Antriebsmotor 26 ist ein Verzweigungsgetriebe 29 angeordnet, wobei wiederum zwischen dem Antriebsmotor 26 und dem Verzweigungsgetriebe 29 eine Kupplung 30 angeordnet ist. Die Wellen 24, 25 werden gleichsinnig, also in gleichen Drehrichtungen 31, 32 um die Drehachsen 27, 28 angetrieben.

Auf dem dem Verzweigungsgetriebe 29 benachbarten ersten Gehäuseabschnitt 10 ist eine erste Materialzuführung 33 in Form eines Trichters angeordnet, durch den aufzubereitendes Kunststoffmaterial 34 und gegebenenfalls Additive 35 in die Gehäusebohrungen 22, 23 einführbar sind. Die Haupt-Schneckenmaschine 3 weist in der Förderrichtung 6 nacheinander eine Einzugszone 36, eine erste Behandlungszone 37, eine erste Übergabezone 38, eine zweite Behandlungszone 39, eine zweite Übergabezone 40, eine dritte Behandlungszone 41 und eine Druckaufbauzone 42 auf. An dem letzten Gehäuseabschnitt 21 ist eine das Gehäuse 9 abschließende Adapterplatte 43 angeordnet. Auf den als Zahnwellen ausgebildeten Wellen 24, 25 sind in der Förderrichtung 6 nacheinander jeweils einander paarweise zugeordnete erste Schneckenelemente 44, erste scheibenförmige Knetelemente 45, zweite Schneckenelemente 46, zweite scheibenförmige Knetelemente 47, dritte Schneckenelemente 48, dritte scheibenförmige Knetelemente 49 und vierte Schneckenelemente 50 angeordnet. Sowohl die Schneckenelemente 44, 46, 48 und 50 als auch die Knetelemente 45, 47 und 49, die benachbart auf den Wellen 24, 25 angeordnet sind, greifen ineinander, sind also paarweise dichtkämmend ausgebildet.

Zur Zuführung von Farbmittel 51 mündet die erste Seiten-Schneckenmaschine 4 in der ersten Übergabezone 38 in die Haupt-Schneckenmaschine 3. Hierzu sind in dem Gehäuseabschnitt 13 zwei seitliche Durchgangsbohrungen 52, 53 ausgebildet, die im Querschnitt die Form einer liegenden Acht haben und in die Gehäusebohrung 23 münden. Die Seiten-Schneckenmaschine 4 dient zur Zuführung und Dosierung des Farbmittels 51. Sie weist ein Gehäuse 54 auf, in dem zwei zueinander parallele und einander durchdringende Gehäusebohrungen 55, 56 ausgebildet sind, die im Querschnitt ebenfalls die Form einer liegenden Acht haben. In den Gehäusebohrungen 55, 56 sind zwei Schneckenwellen 57, 58 konzentrisch angeordnet, die von einem Antriebsmotor 59 um zugehörige Drehachsen 60,61 drehantreibbar sind. Zwischen den Schneckenwellen 57, 58 und dem Antriebsmotor 59 ist ein Verzweigungsgetriebe 62 angeordnet. Die Schneckenwellen 57, 58 werden gleichsinnig, also in gleichen Drehrichtungen um die Drehachsen 60, 61 angetrieben. An dem dem Verzweigungsgetriebe 62 zugewandten Ende des Gehäuses 54 ist eine zweite Materialzuführung 64 in Form eines Trichters angeordnet, durch den das Farbmittel 51 in die Gehäusebohrungen 55, 56 einführbar ist. Die Schneckenwellen 57, 58 sind endseitig in den Durchgangsbohrungen 52, 53 gelagert. Die Schneckenwellen 57, 58 greifen ineinander, sind also dichtkämmend ausgebildet. An einem stromaufwärtigen Ende der Übergabezone 38 ist in dem Gehäuseabschnitt 13 eine erste Entlüftungsöffnung 65 ausgebildet.

Die zweite Seiten-Schneckenmaschine 5 dient zur Zuführung von weiterem Kunststoffmaterial 34 in die Haupt-Schneckenmaschine 3. Hierzu sind in dem Gehäuseabschnitt 17 zwei seitliche Durchgangsbohrungen 66, 67 ausgebildet, die im Querschnitt die Form einer liegenden Acht haben. Die zweite Seiten-Schneckenmaschine 5 ist entsprechend der ersten Seiten-Schneckenmaschine 4 ausgebildet und weist ein Gehäuse 68 auf, in dem zwei zueinander parallele und einander durchdringende Gehäusebohrungen 69, 70 ausgebildet sind. In den Gehäusebohrungen 69, 70 sind konzentrisch zwei dichtkämmende Schneckenwellen 71, 72 angeordnet, die von einem Antriebsmotor 73 um zugehörige Drehachsen 74, 75 gleichsinnig drehantreibbar sind. Zwischen dem Antriebsmotor 73 und dem Gehäuse 68 ist ein Verzweigungsgetriebe 77 angeordnet. An dem dem Verzweigungsgetriebe 77 zugewandten Ende des Gehäuses 68 ist eine dritte Materialzuführung 78 in Form eines Trichters angeordnet, durch den Kunststoffmaterial 34 in die Gehäusebohrungen 69, 70 einführbar ist. An einem stromaufwärtigen Ende der Übergabezone 40 ist in dem Gehäuseabschnitt 17 eine zweite Entlüftungsöffnung 79 ausgebildet. Zudem ist in der dritten Behandlungszone 41 eine dritte Entlüftungsöffnung 80 in dem Gehäuse 9 ausgebildet.

Die Haupt-Schneckenmaschine 3 ist mittels eines Adapters 81 mit der Siebeinrichtung 7 verbunden. Die Siebeinrichtung 7 ist als Siebwechsler ausgebildet. Sie weist ein Gehäuse 82 auf, in dem zwei Siebeinheiten 83, 84 verschiebbar geführt sind. Die Siebeinrichtung 7 ist im Aufbau bekannt und üblich.

Die Siebeinrichtung 7 ist über einen weiteren Adapter 85 mit der Granuliereinrichtung 8 verbunden. Die Granuliereinrichtung 8 ist beispielsweise als Unterwassergranulierung ausgebildet, deren Aufbau bekannt und üblich ist.

Das erfindungsgemäße Verfahren ist wie folgt:
Ein erster Anteil K₁ des Kunststoffmaterials 34 wird über die erste Materialzuführung 33 in der Einzugszone 36 zugeführt. Der erste Anteil K₁ beträgt mindestens 50 Gew.-%, insbesondere mindesten 60 Gew.-% und insbesondere mindestens 70 Gew.-% bezogen auf das gesamte zugeführte Kunststoffmaterial 34. Weiterhin beträgt der erste Anteil K₁ höchstens 95 Gew.-%, insbesondere höchstens 90 Gew.-% und insbesondere höchstens 85 Gew.-% des gesamten zugeführten Kunststoffmaterials 34.

Bei dem Kunststoffmaterial 34 handelt es sich vorzugsweise um ein Polymer aus der Gruppe Polyethylen, Polypropylen, Polyamid, Polystyrol, Polycarbonat, Polyethylenterephthalat, Acrylnitril-Butadien-Styrol, Polybutylenterephthalat. Das Kunststoffmaterial 34 wird vorzugsweise als Granulat und/oder Pulver zugeführt.

Zusätzlich wird über die erste Materialzuführung 33 mindestens ein Additiv 35 in der Einzugszone 36 zugeführt. Zusätzlich können weitere Additive 35 über die zweite Materialzuführung 64 und/oder die dritte Materialzuführung 78 in die Haupt-Schneckenmaschine 3 zugeführt werden. Alternativ kann das mindestens eine Additiv 35 auch ausschließlich über die erste Materialzuführung 33, die zweite Materialzuführung 64 oder die dritte Materialzuführung 78 in die Haupt-Schneckenmaschine 3 zugeführt werden. Vorzugsweise beträgt der Anteil der zugeführten Additive 35 0,1 Gew.-% bis 12 Gew.-% bezogen auf das Farbmittel-Kunststoff-Konzentrat 2. Die Additive 35 umfassen insbesondere Stabilisatoren und Wachse.

Das Kunststoffmaterial 34 wird anschließend in der ersten Behandlungszone 37 aufgeschmolzen und die entstandene Kunststoffschmelze mit dem mindestens einen Additiv 35 vermischt.

In der ersten Übergabezone 38 wird der mit dem mindestens einen Additiv 35 vermischten Kunststoffschmelze das Farbmittel 51 zugeführt. Hierzu wird das Farbmittel 51 über die zweite Materialzuführung 64 in die erste Seiten-Schneckenmaschine 4 zugeführt, die das Farbmittel 51 in dosierter Weise in der Übergabezone 38 der Haupt-Schneckenmaschine 3 zuführt. Aus der Kunststoffschmelze austretende Gase können durch die erste Entlüftungsöffnung 65 entweichen. Vorzugsweise wird ein Anteil F₁ von mindestens 60 Gew.-%, insbesondere von mindestens 80 Gew.-% und insbesondere von mindestens 90 Gew.-% bezogen auf das gesamte zugeführte Farbmittel 51 mittels der ersten Seiten-Schneckenmaschine 4 in der Übergabezone 38 zugeführt. Vorzugsweise werden 100 Gew.-% des Farbmittels 51 mittels der ersten Seiten-Schneckenmaschine 4 zugeführt. Der verbleibende Anteil F₂ des Farbmittels 51 kann beispielsweise stromabwärts mittels der zweiten Seiten-Schneckenmaschine 5 in der Übergabezone 40 zugeführt werden.

Das Farbmittel 51 weist vorzugsweise einen Anteil von mindestens 90 Gew.-% an Pigmentteilchen auf. Bei den Pigmentteilchen handelt es sich insbesondere um Ruß. Der Rußanteil beträgt vorzugsweise 30 Gew.-% bis 60 Gew.-% bezogen auf das Farbmittel-Kunststoff-Konzentrat 2. Der Rußanteil kann Pigmente und/oder leitfähige Ruße enthalten.

In der zweiten Behandlungszone 39 wird das Farbmittel 51 dispergiert und mit der Kunststoffschmelze sowie dem mindestens einen Additiv 35 zu einer schmelzeförmigen Farbmittel-Kunststoff-Mischung 86 homogenisiert.

In der zweiten Übergabezone 40 wird mittels der zweiten Seiten-Schneckenmaschine 5 der verbleibende zweite Anteil K₂ des Kunststoffmaterials 34 zugeführt. Hierzu wird der zweite Anteil K₂ des Kunststoffmaterials 34 über die dritte Materialzuführung 78 der zweiten Seiten-Schneckenmaschine 5 zugeführt, die den zweiten Anteil K₂ des Kunststoffmaterials 34 in dosierter Weise in die Haupt-Schneckenmaschine 3 zuführt. Das Kunststoffmaterial 34 wird der Seiten-Schneckenmaschine 5 vorzugsweise als Granulat und/oder Pulver zugeführt. Der zweite Anteil K₂ beträgt mindestens 5 Gew.-%, insbesondere mindestens 10 Gew.-% und insbesondere mindestens 15 Gew.-% bezogen auf das gesamte zugeführte Kunststoffmaterial 34. Weiterhin beträgt der zweite Anteil K₂ höchstens 50 Gew.-%, insbesondere höchstens 40 Gew.-% und insbesondere höchstens 30 Gew.-% bezogen auf das gesamte zugeführte Kunststoffmaterial 34.

Zusätzlich zu dem Kunststoffmaterial 34 kann in der zweiten Übergabezone 40 der zweite Anteil F₂ des Farbmittels 51 zugeführt werden.

Der zweite Anteil K₂ des Kunststoffmaterials 34 wird anschließend in der dritten Behandlungszone 41 aufgeschmolzen und mit der Mischung 86 zu dem Farbmittel-Kunststoff-Konzentrat 2 homogenisiert. Sofern in der Übergabezone 40 auch Farbmittel 51 zugeführt wird, wird dieses in der dritten Behandlungszone 41 dispergiert und mit der Mischung 86 und dem zugeführten zweiten Anteil K₂ des Kunststoffmaterials 34 homogenisiert.

Der Anteil des Farbmittels 51 in dem Farbmittel-Kunststoff-Konzentrat 2 beträgt mindestens 30 Gew.-%, insbesondere 40 Gew.-% und insbesondere mindestens 50 Gew.-% bezogen auf das Farbmittel-Kunststoff-Konzentrat 2.

Das schmelzeförmige Farbmittel-Kunststoff-Konzentrat 2 wird aufgrund des in der Druckaufbauzone 42 aufgebauten Drucks durch die Adapterplatte 43 und den Adapter 81 gedrückt und der Siebeinrichtung 7 zugeführt, wo das Farbmittel-Kunststoff-Konzentrat 2 gefiltert und hierbei nochmals homogenisiert wird. Anschließend wird das gefilterte Farbmittel-Kunststoff-Konzentrat 2 der Granuliereinrichtung 8 zugeführt, wo das schmelzeförmige Konzentrat 2 zu Granulat umgewandelt wird.

Durch das erfmdungsgemäße Verfahren ist auf einfache Weise eine produktschonende Herstellung von Farbmittel-Kunststoff-Konzentraten 2 bzw. Farb-Masterbatches möglich. Dies ist anhand der in der nachfolgenden Tabelle 1 aufgeführten Vergleichsversuche veranschaulicht.

**Tabelle 1: Vergleichsversuche**

| Versuch Nr. | K₁/K₂ | Drehzahl der Haupt-Schneckenmaschine in l/min | Durchsatz der Haupt-Schneckenmaschine in kg/h | Siebgröße der Siebeinheiten in mesh | Temperatur des Farbmittel-Kunststoff-Konzentrats in °C |
|---|---|---|---|---|---|
| 1 | 100/0 | 400 | 265 | 30 | 330 |
| 2 | 90/10 | 400 | 265 | 30 | 308 |
| 3 | 80/20 | 400 | 265 | 30 | 295 |

Als Kunststoffmaterial 34 wurde bei den Vergleichsversuchen Polyethylen verwendet. Als Farbmittel 51 wurde Ruß verwendet. Der Anteil des Rußes bezogen auf das Farbmittel-Kunststoff-Konzentrat 2 betrug 50 Gew.-%. Zusätzlich wurde ein geringer Anteil an Additiven 35 zugeführt. Der Anteil der zugeführten Additive 35 betrug 0,45 Gew.-%. Die Temperaturmessung erfolgte in dem Farbmittel-Kunststoff-Konzentrat 2 nach dem letzten Gehäuseabschnitt 21.

Wie den Versuchen 1 bis 3 zu entnehmen ist, konnte die Temperatur des Farbmittel-Kunststoff-Konzentrats 2 mit einem zunehmenden Anteil K₂ des Kunststoffmaterials 34, der über die zweite Seiten-Schneckenmaschine 5 zugeführt wurde, zunehmend gesenkt werden. Hierdurch wurde das Farbmittel-Kunststoff-Konzentrat 2 schonend hergestellt und wies eine hohe Qualität auf.

## Patentansprüche

1. Verfahren zur Herstellung von Farbmittel-Kunststoff-Konzentraten, umfassend die folgenden Schritte:
- Bereitstellen einer Aufbereitungsanlage (1) mit
-- einer Haupt-Schneckenmaschine (3), die mindestens folgende Zonen umfasst:
--- eine Einzugszone (36),
--- zwei der Einzugszone (36) in einer Förderrichtung (6) nachgeordnete Behandlungszonen (37, 39, 41), und
--- eine zwischen den Behandlungszonen (37, 39, 41) angeordnete Übergabezone (38, 40), und
-- eine Seiten-Schneckenmaschine (4, 5), die in die Übergabezone (38, 40) der Haupt-Schneckenmaschine (3) mündet,
- Zuführen von Kunststoffmaterial (34) und von Farbmittel (51) in die Haupt-Schneckenmaschine (3), wobei ein erster Anteil (K₁) von mindestens 50 Gew.-% des gesamten zugeführten Kunststoffmaterials (34) vor der der Übergabezone (40) in einer Förderrichtung (6) vorgeordneten Behandlungszone (39) zugeführt wird,
- Homogenisieren des zugeführten Kunststoffmaterials (34) und des zugeführten Farbmittels (51) in der der Übergabezone (40) in der Förderrichtung (6) vorgeordneten Behandlungszone (39) zu einer Mischung (86),
- Zuführen von weiterem Kunststoffmaterial (34) zu der Mischung (86) in der Übergabezone (40) mittels der Seiten-Schneckenmaschine (5), wobei ein zweiter Anteil (K₂) von mindestens 5 Gew.-% des gesamten zugeführten Kunststoffmaterials (34) in der Übergabezone (40) zugeführt wird, und
- Homogenisieren der Mischung (86) und des zugeführten Kunststoffmaterials (34) in der der Übergabezone (40) in der Förderrichtung (6) nachgeordneten Behandlungszone (41) zu einem Farbmittel-Kunststoff-Konzentrat (2).

2. Verfahren nach Anspruch 1, **dadurch gekennzeichnet, dass** ein erster Anteil (K₁) von mindestens 60 Gew.-% und insbesondere von mindestens 70 Gew.-% des gesamten zugeführten Kunststoffmaterials (34) vor der der Übergabezone (40) vorgeordneten Behandlungszone (39) zugeführt wird.

3. Verfahren nach Anspruch 1 oder 2, **dadurch gekennzeichnet, dass** ein erster Anteil (K₁) von höchstens 95 Gew.-%, insbesondere von höchstens 90 Gew.-% und insbesondere von höchstens 85 Gew.-% des gesamten zugeführten Kunststoffmaterials (34) vor der der Übergabezone (40) vorgeordneten Behandlungszone (39) zugeführt wird.

4. Verfahren nach einem der Ansprüche 1 bis 3, **dadurch gekennzeichnet, dass** ein zweiter Anteil (K₂) von mindestens 10 Gew.-% und insbesondere von mindestens 15 Gew.-% des gesamten zugeführten Kunststoffmaterials (34) in der Übergabezone (40) zugeführt wird.

5. Verfahren nach einem der Ansprüche 1 bis 4, **dadurch gekennzeichnet, dass** ein zweiter Anteil (K₂) von höchstens 50 Gew.-%, insbesondere von höchstens 40 Gew.-% und insbesondere von höchstens 30 Gew.-% des gesamten zugeführten Kunststoffmaterials (34) in der Übergabezone (40) zugeführt wird.

6. Verfahren nach einem der Ansprüche 1 bis 5, **dadurch gekennzeichnet, dass** das Kunststoffmaterial (34) ein Polymer aus der Gruppe Polyethylen, Polypropylen, Polyamid, Polystyrol, Polycarbonat, Polyethylenterephthalat, Acrylnitril-Butadien-Styrol und Polybutylenterephthalat ist.

7. Verfahren nach einem der Ansprüche 1 bis 6, **dadurch gekennzeichnet, dass** ein Anteil (F₁) von mindestens 60 Gew.-%, insbesondere von mindestens 80 Gew.-% und insbesondere von mindestens 90 Gew.-% des gesamten zugeführten Farbmittels (51) vor der der Übergabezone (40) vorgeordneten Behandlungszone (39) zugeführt wird.

8. Verfahren nach einem der Ansprüche 1 bis 7, **dadurch gekennzeichnet, dass** das Farbmittel (51) einen Anteil von mindestens 50 Gew.-%, insbesondere mindestens 70 Gew.-%, und insbesondere mindestens 90 Gew.-% an Pigmentteilchen, insbesondere an Ruß enthält.

9. Verfahren nach einem der Ansprüche 1 bis 8, **dadurch gekennzeichnet, dass** das Farbmittel (51) bezogen auf das Farbmittel-Kunststoff-Konzentrat (2) mit einem Anteil von mindestens 30 Gew.-%, insbesondere von mindestens 40 Gew.-% und insbesondere von mindestens 50 Gew.-% zugeführt wird.

10. Verfahren nach einem der Ansprüche 1 bis 9, **dadurch gekennzeichnet, dass** die Aufbereitungsanlage (1) umfasst:
- die Haupt-Schneckenmaschine (3) mit
-- der Einzugszone (36),
-- einer der Einzugszone (36) nachgeordneten ersten Behandlungszone (37),
-- einer der ersten Behandlungszone (37) nachgeordneten ersten Übergabezone (38),
-- einer der ersten Übergabezone (38) nachgeordneten zweiten Behandlungszone (39),
-- einer der zweiten Behandlungszone (39) nachgeordneten zweiten Übergabezone (40),
-- einer der zweiten Übergabezone (40) nachgeordneten dritten Behandlungszone (41),
- eine erste Seiten-Schneckenmaschine (4), die in die erste Übergabezone (38) mündet, und
- eine zweite Seiten-Schneckenmaschine (5), die in die zweite Übergabezone (40) mündet.

11. Verfahren nach Anspruch 10, **dadurch gekennzeichnet, dass** der erste Anteil (K₁) des Kunststoffmaterials (34) in der Einzugszone (36) zugeführt wird.

12. Verfahren nach Anspruch 10 oder 11, **dadurch gekennzeichnet, dass** das Farbmittel (51) mittels der ersten Seiten-Schneckenmaschine (4) in der ersten Übergabezone (38) zugeführt wird.

13. Verfahren nach einem der Ansprüche 10 bis 12, **dadurch gekennzeichnet, dass** der zweite Anteil (K₂) des Kunststoffmaterials (34) mittels der zweiten Seiten-Schneckenmaschine (5) in der zweiten Übergabezone (40) zugeführt wird.

14. Verfahren nach einem der Ansprüche 1 bis 13, **dadurch gekennzeichnet, dass** in die Haupt-Schneckenmaschine (3) mindestens ein Additiv (35) zugeführt und mit dem Kunststoffmaterial (34) sowie dem Farbmittel (51) vermischt wird.

15. Verfahren nach einem der Ansprüche 1 bis 14, **dadurch gekennzeichnet, dass** zumindest die Haupt-Schneckenmaschine (3) eine gleichsinnig drehende und dichtkämmende Doppelschneckenmaschine ist.

## Claims

1. Method for producing colouring agent plastic concentrates comprising the following steps:
- providing a processing plant (1) with
-- a main worm machine (3) comprising at least the following zones:
--- a feed zone (36),
--- two processing zones (37, 39, 41) arranged downstream of the feed zone (36) in a conveying direction (6) and
--- a transfer zone (38, 40) arranged between the processing zones (37, 39, 41) and
-- a side worm machine (4, 5) which opens into the transfer zone (38, 40) of the main worm machine (3),
- supplying plastic material (34) and colouring agent (51) into the main worm machine (3), wherein a first amount (K₁) of at least 50 wt.% of the total amount of supplied plastic material (34) is supplied upstream of the processing zone (39) ahead of the transfer zone (40) in a conveying direction (6),
- homogenising the supplied plastic material (34) and the supplied colouring agent (51) in the processing zone (39) upstream of the transfer zone (40) in the conveying direction (6) into a mixture (86),
- adding additional plastic material (34) to the mixture (86) in the transfer zone (40) by means of the side worm machine (5), wherein a second amount (K₂) of at least 5 wt.% of the total amount of supplied plastic material (34) is added in the transfer zone (40) and
- homogenising the mixture (86) and the supplied plastic material (34) in the processing zone (41) arranged downstream of the transfer zone (40) in the conveying direction (6) to a colouring agent plastic concentrate (2).

2. Method according to claim 1, **characterised in that** a first amount (K₁) of at least 60 wt.% and in particular at least 70 wt. % of the total amount of supplied plastic material (34) is supplied upstream of the processing zone (39) ahead of the transfer zone (40).

3. Method according to claim 1 or 2, **characterised in that** a first amount (K₁) of at most 95 wt.%, in particular at most 90 wt.% and in particular at most 85 wt.% of the total amount of the supplied plastic material (34) is added upstream of the processing zone (39) ahead of the transfer zone (40).

4. Method according to one of claims 1 to 3, **characterised in that** a second amount (K₂) of at least 10 wt.% and in particular at least 15 wt.% of the total amount of plastic material (34) supplied is added in the transfer zone (40).

5. Method according to one of claims 1 to 4, **characterised in that** a second amount (K₂) of at most 50 wt.%, in particular at most 40 wt.% and in particular at most 30 wt.% of the total amount of supplied plastic material (34) is added in the transfer zone (40).

6. Method according to one of claims 1 to 5, **characterised in that** the plastic material (34) is a polymer selected from a group comprising polyethylene, polypropylene, polyamide, polystyrene, polycarbonate, polyethylene terephthalate, acrylonitrile butadiene styrene and polybutylene terephthalate.

7. Method according to one of claims 1 to 6, **characterised in that** an amount (F₁) of at least 60 wt.%, in particular at least 80 wt.% and in particular at least 90 wt.% of the total amount of added colouring agent (51) is added upstream of the processing zone (39) ahead of the transfer zone (40).

8. Method according to one of claims 1 to 7, **characterised in that** the colouring agent (51) contains an amount of at least 50 wt.%, in particular at least 70 wt.% and in particular at least 90 wt.% pigment particles, in particular soot.

9. Method according to one of claims 1 to 8, **characterised in that** the colouring agent (51) is added in an amount of at least 30 wt.%, in particular at least 40 wt.% and in particular at least 50 wt. %, relative to the colouring agent plastic concentrate (2).

10. Method according to one of claims 1 to 9, **characterised in that** the processing plant (1) comprises:
- the main worm machine (3) with
-- the feed zone (36),
-- a first processing zone (37) arranged downstream of the feed zone (36),
-- a first transfer zone (38) arranged downstream of the first processing zone (37),
-- a second processing zone (39) arranged down stream of the first transfer zone (38),
-- a second transfer zone (40) arranged downstream of the second processing zone (39),
-- a third processing zone (41) arranged downstream of the second transfer zone (40),
- a first side worm machine (4) which opens into the first transfer zone (38) and
- a second side worm machine (5) which opens into the second transfer zone (40).

11. Method according to claim 10, **characterised in that** the first amount (K₁) of plastic material (34) is supplied in the feed zone (36).

12. Method according to claim 10 or 11, **characterised in that** the colouring agent (51) is supplied by means of the first side worm machine (4) in the first transfer zone (38).

13. Method according to one of claims 10 to 12, **characterised in that** the second amount (K₂) of plastic material (34) is added by means of the second side worm machine (5) in the second transfer zone (40).

14. Method according to one of claims 1 to 13, **characterised in that** at least one additive (35) is supplied into the main worm machine (3) and mixed with the plastic material (34) and the colouring agent (51).

15. Method according to one of claims 1 to 14, **characterised in that** at least the main worm machine (3) is a co-rotating and tightly meshing double worm machine.

## Revendications

1. Procédé de fabrication de concentrés de colorant-matière synthétique, comprenant les étapes suivantes :
- mise au point d'un poste de préparation (1) comprenant
-- une machine à vis sans fin principale (3), qui se compose des zones suivantes :
--- une zone d'entrée (36),
--- deux zones de traitement (37, 39, 41) disposées après la zone d'entrée (36) dans un sens d'avancement (6), et
--- une zone de transfert (38, 40) disposée entre les zones de traitement (37, 39, 41), et
-- une machine à vis sans fin latérale (4, 5)) qui débouche dans la zone de transfert (38, 40) de la machine à vis sans fin principale (3),
- alimentation en substance en matière synthétique (34) et en colorant (51) de la machine à vis sans fin principale (3), une première partie (K₁) d'au moins 50 % en poids de la substance en matière synthétique (34) totale apportée étant alimentée dans la zone de traitement (39) disposée avant la zone de transfert (40) dans un sens d'avancement (6),
- homogénéisation sous forme d'un mélange (86) de la substance en matière synthétique (34) apportée et du colorant (51) apporté dans la zone de traitement (39) disposée avant la zone de transfert (40) dans le sens d'avancement (6),
- alimentation du mélange (86) en substance en matière synthétique (34) de manière complémentaire dans la zone de transfert (40) au moyen de la machine à vis sans fin latérale (5), une deuxième partie (K₂) d'au moins 5 % en poids de la substance en matière synthétique (34) totale apportée étant alimentée dans la zone de transfert (40), et
- homogénéisation du mélange (86) et de la substance en matière synthétique (34) apportée dans la zone de traitement (41) disposée après la zone de transfert (40) dans le sens d'avancement (6) pour former un concentré colorant-matière synthétique (2).

2. Procédé selon la revendication 1, **caractérisé en ce qu'**une première partie (K₁) d'au moins 60 % en poids, et, en particulier, d'au moins 70 % de la substance en matière synthétique (34) totale apportée est alimentée dans la zone de traitement (39) disposée avant la zone de transfert (40).

3. Procédé selon les revendications 1 ou 2, **caractérisé en ce qu'**une première partie (K₁) d'au plus 95 % en poids, en particulier, d'au plus 90 % en poids, et, en particulier, d'au plus 85 % en poids de la substance en matière synthétique (34) totale apportée est alimentée dans la zone de traitement (39) disposée avant la zone de transfert (40).

4. Procédé selon l'une des revendications 1 à 3, **caractérisé en ce qu'**une deuxième partie (K₂) d'au moins 10 % en poids, et, en particulier, d'au moins 15 % en poids de la substance en matière synthétique (34) totale apportée est alimentée dans la zone de transfert (40).

5. Procédé selon l'une des revendications 1 à 4, **caractérisé en ce qu'**une deuxième partie (K₂) d'au plus 50 % en poids, en particulier, d'au plus 40 % en poids, et, particulièrement, au plus 30 % en poids de la substance en matière synthétique (34) totale apportée est alimentée dans la zone de transfert (40).

6. Procédé selon l'une des revendications 1 à 5, **caractérisé en ce que** la substance en matière synthétique (34) est un polymère faisant partie du groupe constitué par le polyéthylène, le polypropylène, le polyamide, le polystyrène, le polycarbonate, le polyéthylène téréphtalate, l'acrylonitrile-butadiène-styrène et le polybutylène téréphtalate.

7. Procédé selon l'une des revendications 1 à 6, **caractérisé en ce qu'**une partie (F₁) d'au moins 60 % en poids, en particulier, d'au moins 80 % en poids, et, particulièrement, d'au moins 90 % en poids du colorant (51) total apporté est alimentée dans la zone de traitement (39) disposée avant la zone de transfert (40).

8. Procédé selon l'une des revendications 1 à 7, **caractérisé en ce que** le colorant (51) contient une proportion d'au moins 50 % en poids, en particulier, d'au moins 70 ù en poids, et, particulièrement, d'au moins 90 % en poids de particules de pigments, notamment de la suie.

9. Procédé selon l'une des revendications 1 à 8, **caractérisé en ce que** le colorant (51) est alimenté avec une proportion d'au moins 30 % en poids, en particulier, d'au moins 40 % en poids, et, particulièrement, d'au moins 50 % en poids par rapport au concentré de colorant-matière synthétique (2).

10. Procédé selon l'une des revendications 1 à 9, **caractérisé en ce que** le poste de préparation (1) comprend :
- la machine à vis sans fin principale (3) comprenant
-- la zone d'entrée (36),
-- une première zone de traitement (37) disposée après la zone d'entrée (36),
-- une première zone de transfert (38) disposée après la première zone de traitement (37),
-- une deuxième zone de traitement (39) disposée après la première zone de transfert (38),
-- une deuxième zone de transfert (40) disposée après la deuxième zone de traitement (39),
-- une troisième zone de traitement (41) disposée après la deuxième zone de transfert (40),
- une première machine à vis sans fin latérale (4) qui débouche dans la première zone de transfert (38), et
- une deuxième machine à vis sans fin latérale (5) qui débouche dans la deuxième zone de transfert (40).

11. Procédé selon la revendication 10, **caractérisé en ce que** la première partie (K₁) de la substance en matière synthétique (34) est introduite dans la zone d'entrée (36).

12. Procédé selon les revendications 10 ou 11, **caractérisé en ce que** le colorant (51) est alimenté au moyen de la première machine à vis sans fin (4) dans la première zone de transfert (38).

13. Procédé selon l'une des revendications 10 à 12, **caractérisé en ce que** la deuxième partie (K₂) de la substance en matière synthétique (34) est alimentée dans la deuxième zone de transfert (40) au moyen de la deuxième machine à vis sans fin latérale (5).

14. Procédé selon l'une des revendications 1 à 13, **caractérisé en ce qu'**au moins un additif (35) est alimenté dans la machine à vis sans fin principale (3) et est mélangé avec la substance en matière synthétique (34) ainsi qu'avec le colorant (51).

15. Procédé selon l'une des revendications 1 à 14, **caractérisé en ce qu'**au moins la machine à vis sans fin principale (3) est une machine à vis sans fin double tournant dans le même sens et à engrenages compacts.
